# EUROPÄISCHE PATENTSCHRIFT

(11) **EP 2 484 609 B1**
(45) Veröffentlichungstag und Bekanntmachung des Hinweises auf die Patenterteilung: **25.12.2013**
(21) Anmeldenummer: 12153620.5
(22) Anmeldetag: 02.02.2012
(51) Int. Cl.: B65G 27/04

(54) **Förderelement, Fördervorrichtung und Verfahren zum Fördern und Aussortieren von Frischfleischstücken**
Transport element,transport device and method for transporting and sorting fresh meat pieces
Elément de transport, dispositif de transport et procédé pour la transportation destinés au transport et au tri de morceaux de viande fraîche

(30) Priorität: 08.02.2011 DE 102011003815
(43) Veröffentlichungstag der Anmeldung: 08.08.2012
(73) Patentinhaber: Kaufland Fleischwaren SB GmbH & Co. KG, 74172 Neckarsulm (DE)
(72) Erfinder: Groß, Thorsten, 70195 Stuttgart (DE); Dodaj, Martin, 74749 Rosenberg-Hirschlanden (DE); Witt, Michaela, 74196 Neuenstadt am Kocher (DE)
(74) Vertreter: Schmid, Nils T.F.

(56) Entgegenhaltungen:
- EP-A1- 0 611 177
- WO-A1-2008/074354
- DE-U1-202007 006 539
- GB-A- 1 485 858

## Beschreibung

Die Erfindung betrifft ein Förderelement zum Fördern von Frischfleischstücken mit einer Förderoberfläche zum Aufnehmen und Fördern der Frischfleischstücke gemäß dem Oberbegriff des Anspruchs 1. Die Erfindung betrifft ferner eine Fördervorrichtung zum Fördern von Frischfleischstücken entlang einer Förderrichtung, umfassend ein Förderelement und einen Antrieb zum Antreiben des Förderelements.

Die Erfindung betrifft des Weiteren ein Verfahren zum Fördern von Frischfleischstücken entlang einer Förderrichtung. Die Erfindung betrifft des Weiteren die Verwendung eines Förderelements zum Fördern von Frischfleischstücken in einer Fördervorrichtung.

Förderelemente und Fördervorrichtungen der eingangs genannten Art werden in der Fleischproduktion zum Fördern von Frischfleischstücken eingesetzt. WO 2008/074354 offenbart ein Förderelement gemäß dem Oberbegriff des Anspruchs 1. Frischfleischstücke unterscheiden sich von Gefrierfleisch dadurch, dass sie nicht gefroren sind, sondern in einer weichen Konsistenz mit einem für Frischfleisch typischen Feuchtegehalt vorliegen. In der Fleischproduktion kommen als Förderelemente üblicherweise Förderbänder in Fördervorrichtungen wie Förderbandanlagen zum Einsatz.

Für die Anwendung in der Fleischproduktion müssen Förderelemente und Fördervorrichtungen zum Fördern von Frischfleischstücken robust und geräuscharm sein und insbesondere die Förderelemente müssen leicht zu reinigen und zu desinfizieren sein.

Es ist eine Aufgabe der vorliegenden Erfindung, eine alternative, vorzugsweise verbesserte und/oder vereinfachte, Lösung zu existierenden Förderelementen und Fördervorrichtungen zur Förderung von Frischfleischstücken bereitzustellen.

Diese Aufgabe wird gelöst gemäß Anspruch 1, durch ein Förderelement der eingangs genannten Art, das dadurch gekennzeichnet ist, dass das Förderelement ausgebildet und angeordnet ist, die Frischfleischstücke in einer Vibrationsfördervorrichtung entlang einer Förderrichtung zu fördern, wobei die Förderoberfläche ganz oder teilweise aus Noppenblech besteht.

Aufgrund der Eigenschaften von Frischfleisch, insbesondere der Oberflächenbeschaffenheit, der weichen Konsistenz und des Feuchtegehalts von Frischfleisch, wurden bisher Förderbänder, auf denen das Frischfleisch ohne eine Relativbewegung zum Förderband gefördert wird, zum Fördern von Frischfleischstücken eingesetzt.

Existierende Vibrationsfördervorrichtungen mit bekannten Förderelementen sind für die Förderung von Frischfleischstücken nicht geeignet, da sie bei der Förderung von Frischfleischstücken oder von Fördergut mit ähnlichen Eigenschaften nur unzureichende Förderleistungen aufweisen: Das Fördergut staut sich auf dem Förderelement auf und führtsofern überhaupt ein Förderbetrieb zustande kommt - zu häufigen Unterbrechungen und Stillständen.

Die Erfindung beruht auf der Erkenntnis, dass auch Vibrationsfördervorrichtungen zur Förderung von Frischfleischstücken erfolgreich eingesetzt werden können, wenn die Förderelemente erfindungsgemäß ausgebildet sind. Ein erfindungsgemäßes Förderelement mit einer Förderoberfläche, die, vorzugsweise gewalztes, Noppenblech aufweist oder daraus besteht, ermöglicht in einer Vibrationsfördervorrichtung eingesetzt eine zuverlässige Förderung von Frischfleischstücken durch Vibrationsförderung.

Die Ausbildung des erfindungsgemäßen Förderelements mit einer Förderoberfläche ganz oder teilweise aus, vorzugsweise gewalztem, Noppenblech hat den Vorteil, dass Frischfleischstücke weniger stark auf der Förderoberfläche anhaften und sich leichter von der Förderoberfläche lösen lassen, so dass die Förderung einer Vibrationsfördervorrichtung.

Im Gegensatz zu Förderbandanlagen erfolgt in einer Vibrationsfördervorrichtung die Förderung des Förderguts durch eine Relativbewegung des Förderguts zum Förderelement. Dabei wird das Fördergut durch Vibrationen des Förderelements in sprung- oder wurfartige Bewegungen versetzt, bei denen sich die Frischfleischstücke so weit von der Förderoberfläche lösen müssen, dass eine Relativbewegung zwischen Förderelement und Frischfleischstücken entsteht. Durch eine Vielzahl solcher Einzelbewegungen, die verschiedene, auch nicht-lineare Bewegungsanteile aufweisen können, wird das Fördergut in einer Hauptförderrichtung transportiert, die der Förderrichtung der Vibrationsfördervorrichtung entspricht. Diese Förderrichtung ist linear oder geradlinig, also nicht etwa spiralförmig oder kurvenförmig. Aufgrund der Vibration des Förderelements einer Vibrationsfördervorrichtung werden Förderelemente von Vibrationsfördervorrichtungen teilweise auch als Rüttelplatten bezeichnet.

Die Vibrationsförderung beinhaltet somit das wiederholte Lösen des Förderguts von der Förderoberfläche. Dies ist bei bekannten Förderelementen mit Frischfleischstücken nicht oder nur unzureichend möglich, so dass eine Vibrationsförderung für Frischfleischstücke mit bekannten Förderelementen und Vibrationsfördervorrichtungen nicht oder nur unzureichend möglich ist. Die erfindungsgemäße Ausbildung der Förderoberfläche ganz oder teilweise aus gewalztem Noppenblech hat den Vorteil, dass sich die Frischfleischstücke bei Vibration des Förderelements leichter von der Förderoberfläche lösen und so eine zuverlässige Förderung in einer Vibrationsfördervorrichtung erreicht werden kann.

Die Noppen des Noppenblechs sind vorzugsweise als Wölbungen auf der Förderoberfläche ausgebildet. Vorzugsweise sind diese Wölbungen etwa tropfen- oder rautenförmig ausgebildet und reihenweise versetzt angeordnet. Zwischen den vorgewölbten Noppen sind vorzugsweise Vertiefungen ausgebildet. Die Noppen stehen gegenüber den Vertiefungen vorzugsweise bis zu etwa 3 Millimeter hervor, besonders bevorzugt stehen die Noppen gegenüber den Vertiefungen um 2 Millimeter, insbesondere 1,5 Millimeter hervor. Weiterhin besonders bevorzugt ist es, das die Noppen weniger als 1 Millimeter gegenüber den Vertiefungen hervorstehen, wobei es insbesondere bevorzugt ist, dass die Noppen gegenüber den Vertiefungen um 0,3, 0,4, 0,5, 0,6, 0,8 oder 0,9 Millimeter hervorstehen..

Das Noppenblech ist vorzugsweise als mustergewalzte Oberfläche ausgebildet. Solche bevorzugten Noppenbleche haben den Vorteil, dass sich Frischfleischstücke besonders gut von der Förderoberfläche eines erfindungsgemäßen Förderelements lösen lassen, um eine Vibrationsförderung zu ermöglichen.

Weiterhin ist bevorzugt, dass die Förderoberfläche ganz oder teilweise aus Edelstahl, besteht. Edelstahl, insbesondere rostfreier Edelstahl, ist robust sowie leicht zu reinigen und zu desinfizieren. Besonders bevorzugt ist V2A-Stahl mit der Werkstoffnummer 1.4301.

Weiterhin ist bevorzugt, dass der Edelstahl durch Blankglühen unter Luftabschluss und anschließendem leichten Nachwalzen mit polierten Walzen behandelt wurde. Durch diese Behandlung des Edelstahls wird eine besonders glatte Oberfläche erzeugt, die das Ablösen der Frischfleischstücke weiter unterstützt.

Vorzugsweise weist das Förderelement in seiner Betriebsstellung eine Neigung zur Horizontalen auf, die vorzugsweise zwischen 0°und 60° beträgt. Vorzugsweise ist die Neigung kleiner als 45°, insbesondere beträgt die Neigung zwischen 15° und 25°. Besonders bevorzugt ist eine Neigung von ca. 20°.

Die Erfindung kann dadurch fortgebildet werden, dass das Förderelement einen Trennabschnitt mit einem, zwei oder mehreren Trennelementen aufweist, wobei das Trennelement bzw. die Trennelemente derart ausgebildet und angeordnet ist bzw. sind, dass die Frischfleischstücke vereinzelt werden, wenn sie den Trennabschnitt in Förderrichtung passieren.

Bei der Förderung von Frischfleischstücken kommt es nicht nur darauf an, eine zuverlässige Förderung sicherzustellen, sondern auch eine Vereinzelung, d.h. Trennung der einzelnen Frischfleischstücke voneinander zu gewährleisten. Dies ist beispielsweise insbesondere in der Gulaschproduktion von Bedeutung, wenn nach dem Schneiden von Frischfleischwürfein diese bei der Förderung für die weitere Verarbeitung vereinzelt werden müssen, d. h. sichergestellt werden muss, dass die einzelnen Frischfleischstücke nicht aneinander haften. Beim bekannten Transport von Frischfleischstücken, insbesondere über Förderbänder, ist zur Vereinzelung der Frischfleischstücke ein aufwändiger manueller Eingriff erforderlich.

Das Förderelement gemäß der Fortbildungsform ermöglicht jedoch eine automatische Vereinzelung ohne manuellen Eingriff durch die Anordnung von einem oder mehreren Trennelementen in einem Trennabschnitt des Förderelements. Wenn die Frischfleischstücke durch die Vibration des Förderelements in einer Vibrationsfördervorrichtung relativ zum Förderelement entlang einer Förderrichtung bewegt werden, passieren die Frischfleischstücke den Trennabschnitt und damit das Trennelement bzw. die Trennelemente. Die Trennelemente sind dabei derart ausgebildet, dass sie aneinander haftende Frischfleischstücke voneinander lösen und so eine Vereinzelung der Frischfleischstücke bewirken.

Die Erfindung kann dadurch fortgebildet werden, dass das Trennelement bzw. die Trennelemente stabförmig ausgebildet ist bzw. sind, mit vorzugsweise kreisförmigem, elliptischem, quaderförmigem, linsenförmigem, quadratischem, dreieckigem oder polygonförmigem Querschnitt. Das Trennelement bzw. die Trennelemente kann bzw. können beispielsweise als Trennbolzen ausgestaltet sein. Diese bevorzugten Fortbildungsformen haben den Vorteil, dass sie besonders gut zur Vereinzelung der Frischfleischstücke im Trennabschnitt beitragen.

Die Erfindung kann dadurch fortgebildet werden dass, das Trennelement bzw. die Trennelemente ganz oder teilweise aus Edelstahlbesteht bzw. bestehen. Edelstahl, insbesondere rostfreier Edelstahl, ist robust sowie leicht zu reinigen und zu desinfizieren. Besonders bevorzugt ist V2A-Stahl mit der Werkstoffnummer 1.4301. Weiterhin ist besonders bevorzugt, dass jedes Trennelement einen abgerundeten Außenumfang aufweist.

Die Erfindung kann dadurch fortgebildet werden, dass die Trennelemente in einer Reihe oder in mehreren Reihen quer zur Förderrichtung und/oder in Förderrichtung und/oder in einem Winkel zwischen 0° und 90° zur Förderrichtung angeordnet sind. Die Anordnung der Trennelemente in einer Reihe oder in mehreren Reihen hat den Vorteil, dass die Vereinzelung der Fleischstücke verbessert wird, insbesondere bei der Anordnung der Trennelemente in zwei oder mehreren Reihen.

Die Erfindung kann dadurch fortgebildet werden, dass die Trennelemente des Trennabschnitts unterschiedlich ausgebildet sind, insbesondere hinsichtlich ihrer Querschnittsform. Bei unterschiedlich ausgebildeten Trennelementen können unterschiedliche Trenneigenschaften in dem Trennabschnitt kombiniert werden.

Die Erfindung kann dadurch fortgebildet werden, dass das Förderelement zwei oder mehrere Trennabschnitte aufweist.

Durch die Anordnung zweier oder mehrerer Trennabschnitte mit jeweils einem oder mehreren Trennelementen gemäß der zuvor beschriebenen Fortbildungsformen kann die Vereinzelung der Frischfleischstücke weiter verbessert werden.

Die zwei oder mehreren Trennabschnitte sind vorzugsweise in Förderrichtung voneinander beabstandet. Die unterschiedlichen Trennabschnitte können gleich ausgebildet sein oder sich voneinander unterscheiden, insbesondere hinsichtlich der Ausgestaltung und Anordnung der Trennelemente. Unterschiedlich ausgebildete Trennabschnitte haben den Vorteil, dass verschiedene Trenneigenschaften kombiniert werden können.

Die Erfindung kann dadurch fortgebildet werden, dass sich einer, mehrere oder alle der Trennabschnitte über die gesamte Breite der Förderoberfläche erstrecken, wobei die Breite der Förderoberfläche ihrer Ausdehnung in einer Richtung quer zur Förderrichtung und parallel zur Förderoberfläche entspricht.

Diese Ausdehnung der Trennabschnitte über die gesamte Breite der Förderoberfläche hat den Vorteil, dass sämtliche auf der Förderoberfläche befindlichen Frischfleischstücke den Trennabschnitt und damit die Trennelemente passieren müssen und nicht beispielsweise an den Rändern der Förderoberfläche aneinander haftende Frischfleischstücke verbleiben.

Die Erfindung kann dadurch fortgebildet werden, dass das Förderelement einen ersten Sortierabschnitt aufweist, der angeordnet und ausgebildet ist, Frischfleischstücke und/oder Fremdkörper auszusortieren und von einer weiteren Förderung in Förderrichtung auszuschließen, die von einer ersten vorbestimmten Abmessung abweichen, insbesondere diese unterschreiten.

Neben einer zuverlässigen Förderung von Frischfleischstücken ist es in der Fleischproduktion weiterhin wichtig, eine gleichbleibende Qualität sicherzustellen. Dazu zählt beispielsweise auch eine homogene Größenverteilung von Frischfleischstücken und/oder das Aussortieren von Fremdkörpern.

Die erfindungsgemäße Fortbildung sieht daher vor, dass in einem ersten Sortierabschnitt Frischfleischstücke aussortiert werden, die von einer ersten vorbestimmten Abmessung abweichen, insbesondere diese unterschreiten. Zusätzlich oder anstelle der Frischfleischstücke können auch unter den Frischfleischstücken befindliche Fremdkörper aussortiert werden, die von einer ersten vorbestimmten Abmessung abweichen, insbesondere diese unterschreiten. Die erste vorbestimmte Abmessung kann beispielsweise ein Durchmesser oder eine Längen- oder Breitenausdehnung eines Frischfleischstücks und/oder Fremdkörpers sein.

Auf diese Weise kann sichergestellt werden, dass die aussortierten Frischfleischstücke und/oder sonstigen Gegenständen entlang der Förderrichtung zusammen mit den übrigen Frischfleischstücken einer weiteren Verarbeitung zugeführt werden.

Die erfindungsgemäße Eignung des Förderelements für eine Vibrationsfördervorrichtung ermöglicht eine automatische Sortierung, da bei der Vibrationsförderung im Gegensatz zur bekannten Förderung über Transportbänder eine Relativbewegung zwischen Förderelement und Frischfleischstücken erfolgt, so dass die Frischfleischstücke den ersten Sortierabschnitt passieren und währenddessen eine Sortierung durch einen Sortierabschnitt des Förderelements erfolgen kann. Die erfindungsgemäße Fortbildung hat somit ferner den Vorteil, dass kein manueller Eingriff zum Sortieren der Frischfleischstücke und/oder Fremdkörper erforderlich ist.

Die Erfindung kann dadurch fortgebildet werden, dass der erste Sortierabschnitt in Förderrichtung hinter dem bzw. den Trennabschnitten angeordnet ist. Dies hat den Vorteil, dass die Frischfleischstücke bereits vereinzelt sind, bevor sie den ersten Sortierabschnitt passieren und somit die Sortierqualität verbessert wird, da die Frischfleischstücke nach der Vereinzelung im Trennabschnitt bzw. in den Trennabschnitten nicht mehr bzw. nur noch in deutlich geringerem Maße, aneinander haften.

Die Erfindung kann dadurch fortgebildet werden, dass das Förderelement mehrere Sortierabschnitte aufweist, wobei jeder der Sortierabschnitte angeordnet und ausgebildet ist, Frischfleischstücke und/oder Fremdkörper auszusortieren und von einer weiteren Förderung in Förderrichtung auszuschließen, die von einer ersten vorbestimmten Abmessung abweichen, insbesondere diese unterschreiten.

Die Anordnung mehrerer Sortierabschnitte hat den Vorteil, dass die Sortierqualität erhöht werden kann. Die mehreren Sortierabschnitte dienen vorzugsweise wie der erste Sortierabschnitt dazu, Frischfleischstücke und/oder Fremdkörper auszusortieren, die von bestimmten Abmessungen abweichen, insbesondere diese unterschreiten.

Die mehreren Sortierabschnitte können gleich ausgebildet sein, insbesondere um Frischfleischstücke und/oder Fremdkörper der gleichen vorbestimmten Abmessung auszusortieren.

Die Erfindung kann dadurch fortgebildet werden, dass sich die vorbestimmten Abmessungen der Sortierabschnitte unterscheiden, insbesondere hinsichtlich der vorbestimmten Abmessungen zur Aussortierung von Frischfleischstücken und/oder Fremdkörpern. Dies hat den Vorteil, dass in unterschiedlichen Sortierabschnitten Frischfleischstücke und/oder Fremdkörper unterschiedlicher Größe aussortiert werden können.

Die Erfindung kann dadurch fortgebildet werden, dass die Sortierabschnitte derart angeordnet sind, dass die jeweilige vorbestimmte Abmessung entlang der Förderrichtung zunimmt. Diese Fortbildungsform hat den Vorteil, dass in dem in Förderrichtung ersten Sortierabschnitt die kleinsten Frischfleischstücke und/oder Fremdkörper aussortiert werden und in dem in der Förderrichtung letzten Sortierabschnitt die Frischfleischstücke und/oder Fremdkörper mit der größten vorbestimmten Abmessung aussortiert werden. Auf diese Weise können die aussortierten Frischfleischstücke und/oder Fremdkörper nach ihrer Größe getrennt und ggf. getrennt von den übrigen Frischfleischstücken einer weiteren Verarbeitung oder getrennten Entsorgung zugeführt werden.

Die Erfindung kann dadurch fortgebildet werden, dass voneinander in Förderrichtung beabstandet sind. Diese Fortbildungsform erleichtert insbesondere eine getrennte Aufnahme bzw. Abfuhr der in den unterschiedlichen Sortierabschnitten aussortierten Frischfleischstücke und/oder Fremdkörper.

Die Erfindung kann dadurch fortgebildet werden, dass einer, mehrere oder alle der Sortierabschnitte als Anordnung von mehreren Durchtrittsöffnungen im Förderelement ausgebildet ist bzw. sind. Diese Ausbildung des Sortierabschnitts bzw. der Sortierabschnitte in Form mehrerer Durchtrittsöffnungen im Förderelement entspricht einer siebartigen Gestaltung. Diese ist, beispielsweise durch Ausstanzen, leicht herzustellen und leicht zu reinigen.

Vorzugsweise haben die Durchtrittsöffnungen einen kreisförmigen, elliptischen, quaderförmigen, linsenförmigen, quadratischen, dreieckigen oder polygonförmigen Querschnitt. Die Durchtrittsöffnungen können sich innerhalb eines Sortierabschnitts unterscheiden. Mehrere Sortierabschnitte können sich voneinander auch durch eine unterschiedliche Ausbildung der Durchtrittsöffnungen unterscheiden. Eine unterschiedliche Ausbildung der Sortierabschnitte hat den Vorteil, dass die Querschnittformen auf bestimmte auszusortierende Frischfleischstückabmessungen und/oder Fremdkörpergrößen abgestimmt sein können.

Die Erfindung kann dadurch fortgebildet werden, dass die Durchtrittsöffnungen eines Sortierabschnitts in Reihen parallel zur Förderrichtung angeordnet sind. Weiterhin ist bevorzugt, dass benachbarte Reihen der Durchtrittsöffnungen eines Sortierabschnitts in Förderrichtung zueinander versetzt angeordnet sind. Weiterhin ist bevorzugt, dass die Durchtrittsöffnungen einer Reihe gleichmäßig voneinander beabstandet sind. Zudem ist bevorzugt, dass die Reihen eines Sortierabschnitts quer zur Förderrichtung gleichmäßig voneinander beabstandet sind. Ferner ist bevorzugt, dass der Abstand der Reihen eines Sortierabschnitts voneinander dem Abstand der Durchtrittsöffnungen einer Reihe voneinander entspricht. Diese Fortbildungsformen haben einzeln oder in Kombination miteinander den Vorteil, dass eine besonders zuverlässige Sortierqualität erreicht werden kann.

Die Erfindung kann dadurch fortgebildet werden, dass sich einer, mehrere oder alle der Sortierabschnitte über die gesamte Breite der Förderoberfläche erstrecken, wobei die Breite der Förderoberfläche ihrer Ausdehnung in einer Richtung quer zur Förderrichtung und parallel zu der Förderoberfläche entspricht. Diese Fortbildungsform hat den Vorteil, dass das Fördergut entlang der gesamten Breite der Förderoberfläche sortiert wird und Frischfleischstücke und/oder Fremdkörper einen Sortierabschnitt nicht beispielsweise an den Rändern der Förderoberfläche unsortiert passieren können.

Die Erfindung kann dadurch fortgebildet werden, dass das Förderelement als Rinne oder Trog ausgebildet ist. Besonders bevorzugt ist, dass das Noppenblech an mindestens einer parallel zur Förderrichtung verlaufenden Kante der Förderoberfläche abgekantet ist. Diese Fortbildungsformen haben den Vorteil, dass die Frischfleischstücke am Herunterfallen von dem Förderelement bzw. von der Förderoberfläche gehindert werden. Dies ist insbesondere aufgrund der bei der Vibrationsförderung erfolgenden Relativbewegung zwischen Frischfleischstücken und Förderelement bevorzugt.

Weitere vorteilhafte Ausführungsvarianten des erfindungsgemäßen Förderelements ergeben sich durch Kombination der hier erörterten bevorzugten Merkmale

Ein weiterer Aspekt der Erfindung betrifft eine Fördervorrichtung gemäß Anspruch 5.

Wie bereits oben beschrieben ist das erfindungsgemäße Förderelement ausgebildet, Frischfleischstücke in einer Vibrationsfördervorrichtung zu fördern. Die erfindungsgemä-βe Fördervorrichtung weist ein erfindungsgemäßes Förderelement bzw. eine seiner Fortbildungen auf. Demnach ergeben sich vorteilhafte Ausführungsvarianten der erfindungsgemäßen Fördervorrichtung durch oben erörterte bevorzugte Fortbildungen des erfindungsgemäßen Förderelements oder Kombinationen dieser Fortbildungen. Zu den Vorteilen, Ausführungsvarianten und Details der erfindungsgemäßen Fördervorrichtung mit dem erfindungsgemäßen Förderelement bzw. seiner Fortbildungen wird auf die vorangegangene Beschreibung zu den entsprechenden Merkmalen des Förderelements und seiner Fortbildungen verwiesen.

Die erfindungsgemäße Fördervorrichtung kann dadurch fortgebildet werden, dass die Fördervorrichtung einen, zwei oder mehrere Sammelbehälter aufweist zur Aufnahme der aussortierten Frischfleischstücke. Besonders bevorzugt ist es, dass jedem der Sortierabschnitte des Förderelements ein Sammelbehälter zugeordnet ist. Diese Fortbildungsformen haben den Vorteil, dass die aussortierten Frischfleischstücke und/oder Fremdkörper in den Sammelbehältern getrennt voneinander aufgenommen und damit auch getrennt voneinander einer Entsorgung bzw. Weiterverarbeitung zugänglich gemacht werden können.

Die Erfindung kann dadurch fortgebildet werden, dass der bzw. die Sammelbehälter derart ausgebildet und angeordnet ist bzw. sind, dass die aussortierten Frischfleischstücke und/oder Fremdkörper durch Schwerkrafteinwirkung in den bzw. die Sammelbehälter gelangen.

Diese Fortbildungsform ist bevorzugt, da auf diese Weise kein gesonderter Transport und beispielsweise keine gesonderte Fördervorrichtung erforderlich sind, um die aussortierten Frischfleischstücke und/oder Fremdkörper in den bzw. die Sammelbehälter zu befördern. Dies kann in besonders einfacherer Weise dadurch realisiert werden, dass die Sammelbehälter jeweils in Schwerkraftrichtung unterhalb der jeweiligen Sortierabschnitte angeordnet sind, was insbesondere bei einer siebartigen Ausbildung der Sortierabschnitte mit Durchtrittsöffnungen im Förderelement zu einem Durchfallen der aussortierten Frischfleischstücke und/oder Fremdkörper durch die Durchtrittsöffnungen in die Sammelbehälter führt.

Die Erfindung kann dadurch fortgebildet werden, dass der bzw. die Sammelbehälter unabhängig von vibrierenden Komponenten der Fördervorrichtung gelagert ist bzw. sind.

Gemäß dieser Fortbildungsform ist bzw. sind die Sammelbehälter derart ausgebildet und angeordnet, dass Vibrationen des Förderelements oder anderer vibrierender Komponenten der Fördervorrichtung nicht, vorzugsweise weder direkt noch indirekt, auf den bzw. die Sammelbehälter übertragen werden. Dazu ist bzw. sind die Sammelbehälter vorzugsweise auf einer Tragestruktur gelagert, die nicht mit der Tragstruktur der vibrierenden Komponenten der Fördervorrichtung verbunden ist. Diese Fortbildungsformen haben den Vorteil, dass die Fördervorrichtung sehr geräuscharm arbeitet, da die Geräuschbelastung insbesondere von den vibrierenden Komponenten der Fördervorrichtung ausgeht. Wenn der bzw. die Sammelbehälter frei von Vibrationen gehalten werden kann bzw. können, verringert dies die Geräuschbelastung durch die Fördervorrichtung deutlich.

Die Erfindung kann dadurch fortgebildet werden, dass das Förderelement mit anderen Komponenten der Fördervorrichtung über mindestens ein Dämmelement verbunden ist.

Diese Fortbildungsform sieht vor, dass das der Vibration ausgesetzte Förderelement so über mindestens ein Dämmelement gelagert ist, dass keine direkte Verbindung, d.h. eine Verbindung ohne Dämmelement, mit anderen Komponenten der Fördervorrichtung besteht. Durch die Verbindung über das mindestens eine Dämmelement wird die Übertragung von Vibrationen auf andere Komponenten der Fördervorrichtung minimiert. Auf diese Weise kann die durch die Fördervorrichtung erzeugte Geräuschbelastung deutlich reduziert werden.

Insbesondere ist es bevorzugt, dass zwischen dem Förderelement und anderen Komponenten der Fördervorrichtung eine Dämmplatte angeordnet ist. Auf diese Weise kann eine besonders effiziente und effektive Reduzierung der Übertragung von Vibrationen und damit eine besonders deutliche Reduzierung der Geräuschbelastung erreicht werden.

Ein weiterer Aspekt der Erfindung ist ein Verfahren zum Fördern von Frischfleischstücken entlang einer Förderrichtung, gemäß Anspruch 9.

Das erfindungsgemäße Verfahren dient insbesondere zum Betreiben einer erfindungsgemäßen Fördervorrichtung wie zuvor beschrieben mit einem ebenfalls zuvor beschriebenen erfindungsgemäßen Förderelement. Das erfindungsgemäße Verfahren kann fortgebildet werden, um insbesondere mit den zuvor beschriebenen Fortbildungen der erfindungsgemäßen Fördervorrichtung sowie den zuvor beschriebenen Fortbildungen des erfindungsgemäßen Förderelements verwendet zu werden.

Zu den Ausführungsformen, spezifischen Merkmalen, Varianten und Vorteilen der Merkmale dieses Verfahrens und der Verfahrensfortbildungen wird auf die vorangegangene Beschreibung zu den entsprechenden Merkmalen der Fördervorrichtung und des Förderelements verwiesen.

Ein weiterer Aspekt der Erfindung ist die Verwendung eines zuvor beschriebenen erfindungsgemäßen Förderelements gemäß Anspruch 10.

Eine bevorzugte Ausführungsform der Erfindung wird beispielhaft anhand der beiliegenden Figuren beschrieben. Es zeigen:
- Fig.1:: eine dreidimensionale Ansicht einer Ausführungsform einer erfindungsgemäßen Fördervorrichtung mit einem erfindungsgemäßen Förderelement,
- Fig. 2:: eine Seitenansicht der Fördervorrichtung gemäß Figur 1,
- Fig. 3:: eine Draufsicht auf die Fördervorrichtung gemäß Figur 1 und
- Fig. 4:: eine Vorderansicht der Fördervorrichtung gemäß Figur 1.

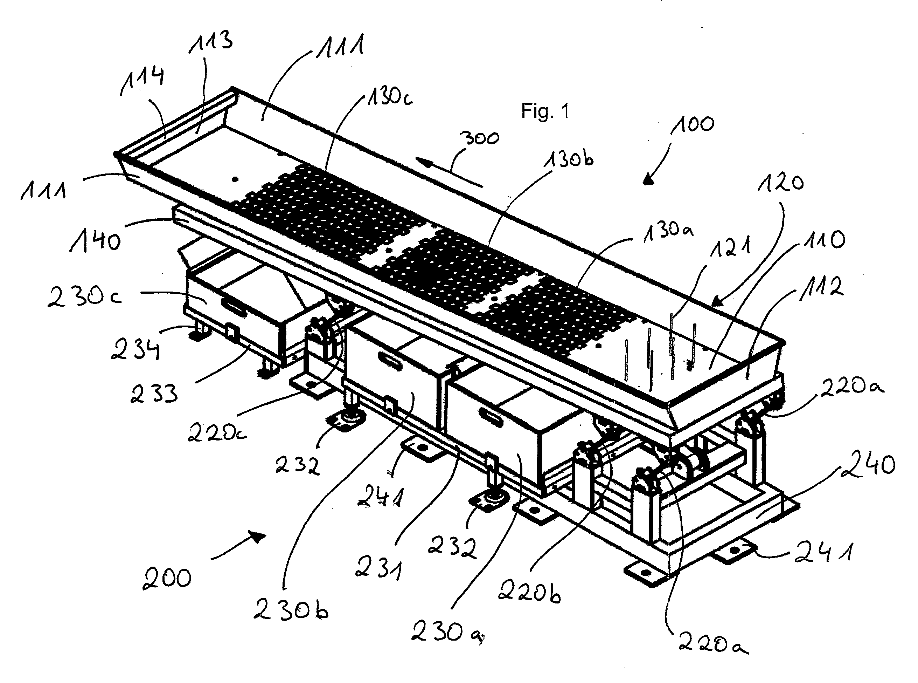

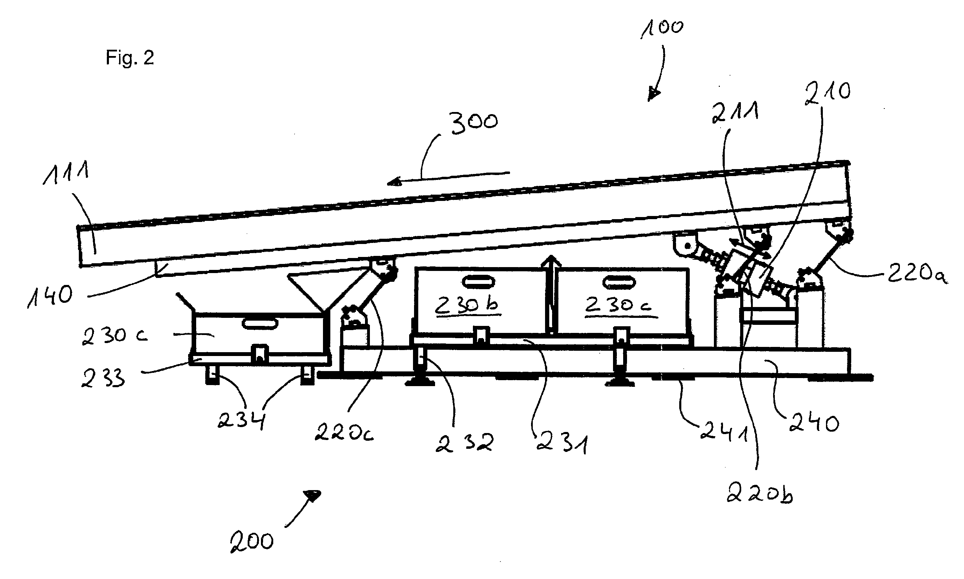

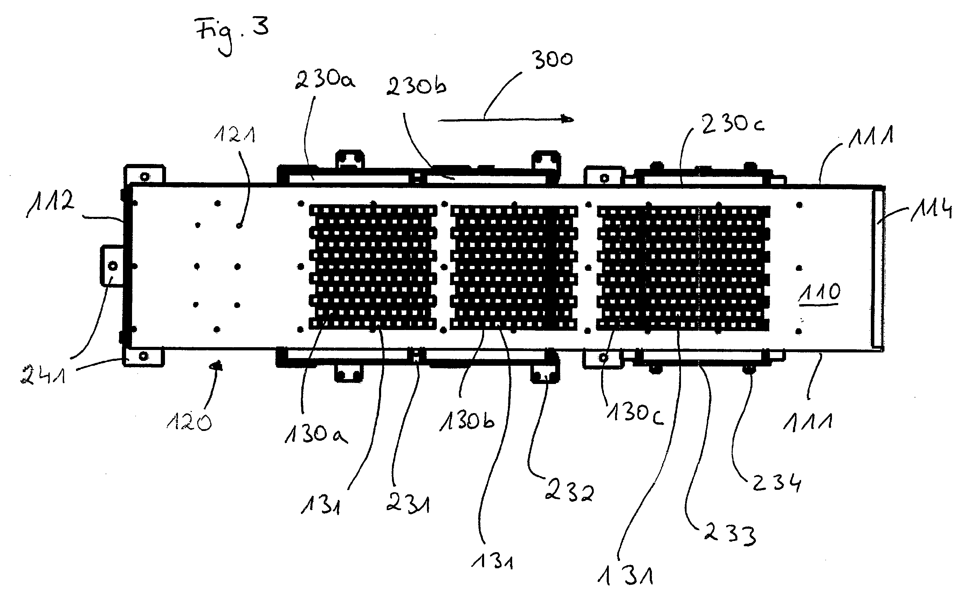

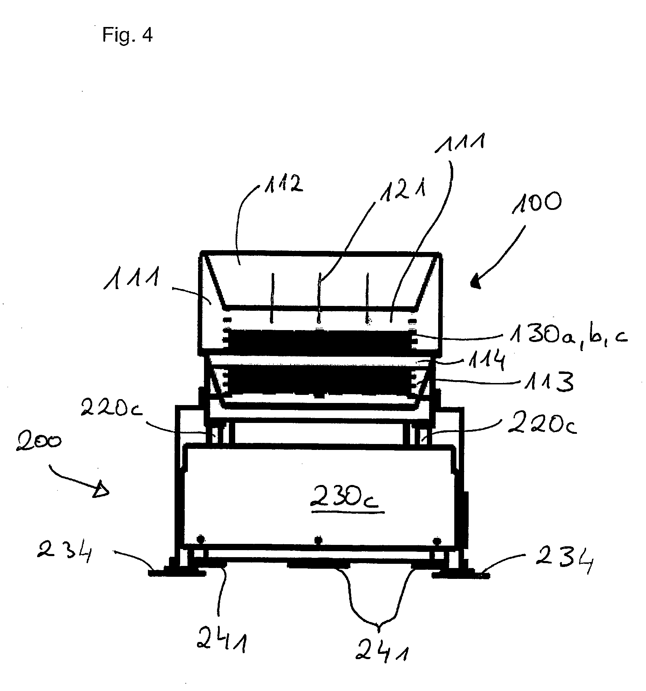

Die Figuren 1 bis 4 zeigen eine beispielhafte Ausführungsform einer erfindungsgemäßen Fördervorrichtung 200 zum Fördern von Frischfleischstücken entlang einer Förderrichtung 300. Die Fördervorrichtung 200 weist eine beispielhafte Ausführungsform eines erfindungsgemäßen Förderelements 100 sowie einen Antrieb 210 zum Antreiben des Förderelements 100 auf. Die Fördervorrichtung 200 ist als Vibrationsfördervorrichtung ausgebildet. Das Förderelement 100 ist entlang mindestens einer Vibrationsrichtung 211 über die Lager 220a,b,c beweglich gelagert.

Der Antrieb 210 ist so angeordnet und ausgebildet, dass er das Förderelement 100 entlang der mindestens einen Vibrationsrichtung 211 antreiben kann. Auf diese Weise wird das Förderelement 100 in Vibrationen versetzt. Sich auf der Förderoberfläche 110 befindliche Frischfleischstücke und/oder Fremdköper werden durch die Vibrationen in sprungartige Bewegungen versetzt und in Relativbewegung zum Förderelement 100 entlang der Förderrichtung 300 gefördert.

Das Förderelement 100 weist in seiner Betriebsstellung eine Neigung zur Horizontalen auf, die vorzugsweise zwischen 0°und 60° beträgt, weiterhin vorzugsweise kleiner ist als 45°und insbesondere zwischen 15° und 25° beträgt. Besonders bevorzugt ist eine Neigung von ca. 20°.

Die Förderoberfläche 110 ist ganz oder teilweise aus, vorzugsweise gewalztem, Noppenblech ausgebildet und besteht ganz oder teilweise aus rostfreiem Edelstahl mit der Werkstoffnummer 1.4301. Der Edelstahl der Förderoberfläche 110 wurde durch Blankglühen unter Luftabschluss und anschließendem leichten Nachwalzen mit polierten Walzen behandelt. Diese Ausbildung der Förderoberfläche 110 ermöglicht ein besonders leichtes Lösen der Frischfleischstücke von der Förderoberfläche und damit die Vibrationsförderung von Frischfleischstücken.

Das Förderelement 100 weist einen Trennabschnitt 120 auf, in dem mehrere, hier sechs, Trennelemente 121 angeordnet sind, die dazu dienen, die Frischfleischstücke beim Passieren des Trennabschnitts 120 zu vereinzeln. Die Trennelemente 121 sind stabförmig mit kreisförmigem Querschnitt ausgebildet und können auch als Trennbolzen bezeichnet werden. Die sechs Trennelemente 121 sind in zwei Reihen quer zur Förderrichtung 300 angeordnet.

In Förderrichtung 300 hinter dem Trennabschnitt sind drei Sortierabschnitte 130a,b,c voneinander beabstandet angeordnet. Jeder der Sortierabschnitte 130a,b,c ist angeordnet und ausgebildet, Frischfleischstücke und/oder Fremdkörper auszusortieren und von einer weiteren Förderung in Förderrichtung 300 auszuschließen, die von einer ersten vorbestimmten Abmessung abweichen, insbesondere diese unterschreiten.

Die Sortierabschnitte 130a,b,c erstrecken sich über die gesamte Breite der Förderoberfläche 110, wobei die Breite der Förderoberfläche 110 ihrer Ausdehnung quer zur Förderrichtung 300 und parallel zur Förderoberfläche 110 entspricht. Die Sortierabschnitte 130a,b,c sind jeweils als Anordnung von mehreren Durchtrittsöffnungen 131 im Förderelement 110 ausgebildet. Die Abmessungen der im Wesentlichen quadratischen Durchtrittsöffnungen 131 sind auf die auszusortierenden Frischfleischstücke und/oder Fremdkörper abgestimmt.

Die Vielzahl der Durchtrittsöffnungen 131 eines jeden Sortierabschnitts 130a,b,c sind in Reihen parallel zur Förderrichtung 300 angeordnet. Benachbarte Reihen der Durchtrittsöffnungen 131 eines jeden Sortierabschnitts 130a,b,c sind in Förderrichtung 300 zueinander versetzt angeordnet. Zudem sind die Durchtrittsöffnungen 131 einer Reihe gleichmäßig voneinander beabstandet. Die Reihen eines Sortierabschnitts 130a,b,c quer zur Förderrichtung 300 sind gleichmäßig voneinander beabstandet. Der Abstand der Reihen eines Sortierabschnitts 130a,b,c voneinander entspricht dem Abschnitt der Durchtrittsöffnungen 131 einer Reihe voneinander.

Das Förderelement 100 ist als Rinne oder Trog ausgebildet, wobei das Noppenblech an den beiden parallel zur Förderrichtung 300 verlaufenden Kanten 111 der Förderoberfläche 110 abgekantet ist. Weiterhin ist das Noppenblech an der quer zur Förderrichtung verlaufenden Kante 112 der Förderoberfläche 110 abgekantet. An der in Förderrichtung 300 am Ende des Förderelements 100 liegenden Kante befindet sich eine Öffnung 113 mit einem Steg 114. Durch die Öffnung 113 können die zu fördernden Frischfleischstücke das Förderelement 100 bzw. die Fördervorrichtung 200 zur Weiterverarbeitung verlassen.

Die Fördervorrichtung 200 weist drei Sammelbehälter 230a,b,c auf, die jeweils einem der Sortierabschnitte 130a,b,c zugeordnet sind. Die Sammelbehälter 230a,b,c sind so ausgebildet und angeordnet, dass die aussortierten Frischfleischstücke und/oder Fremdkörper durch Schwerkrafteinwirkung in die Sammelbehälter 230a,b,c gelangen können. Dazu sind die Sammelbehälter 230a.b,c in Schwerkraftrichtung unterhalb der jeweiligen Sortierabschnitte 130a,b,c angeordnet.

Das Förderelement 100 ist über die Lager 220a,b,c beweglich mit dem Fördertragrahmen 240 verbunden, der über die Laschen 241 auf einem Untergrund oder einer weiteren Tragstruktur befestigt werden kann. Auf der der Förderoberfläche 110 abgewandten Seite des Förderelements 100 ist eine Dämmplatte 140 angeordnet, über die das Förderelement 100 mit den anderen Komponenten der Fördervorrichtung verbunden ist. Diese Dämmplatte 140 dient dazu, die Übertragung von Vibrationen des Förderelements auf andere Komponenten der Fördervorrichtung 200 zu minimieren, insbesondere über die Lager 220a,b,c auf den Fördertragrahmen 240.

Die Sammelbehälter 230a,b,c sind unabhängig von vibrierenden Komponenten der Fördervorrichtung über die Sammelbehältertragrahmen 231 und 233 gelagert. Die Sammelbehältertragrahmen 231, 233 können über Ständer 232, 234 ebenfalls auf einem Untergrund oder einer weiteren Tragstruktur befestigt werden. Durch die Trennung der Tragrahmen für das vibrierende Förderelement auf der einen Seite (Fördertragrahmen 240) und die Sammelbehälter 230a,b,c auf der anderen Seite (Sammelbehältertagrahmen 231, 233) kann die Geräuschbelastung deutlich reduziert werden, da eine Übertragung der Vibrationen auf die Sammelbehälter 230a,b,c verhindert wird. Das Vorsehen einer Dämmplatte 140, die die Übertragung der Vibrationen der Dämmplatte 140 auf übrige Komponenten der Fördervorrichtung 200, insbesondere die Lagerungen 220a,b,c und den Fördertragrahmen 240, verringert, reduziert werden.

Das Vorsehen einer erfindungsgemäßen Förderelements 100 mit einer Förderoberfläche 110 mit den im Trennabschnitt 120 angeordneten Trennelementen 121 sowie den folgenden Sortierabschnitten 130a,b,c ermöglicht eine Vibrationsförderung von Frischfleischstücken, den Verzicht auf manuelle Eingriffe zur Vereinzelung und Sortierung von Frischfleischstücken und damit das automatisierte Fördern, Vereinzeln und Sortieren der Frischfleischstücke auf eine einfache und kostengünstige Art und Weise, wobei gleichzeitig eine robuste, einfach zu reinigende und geräuscharme Förderung sichergestellt wird.

## Patentansprüche

1. Förderelement (100) zum Fördern von Frischfleischstücken mit einer Förderoberfläche (110) zum Aufnehmen und Fördern der Frischfleischstücke,
wobei das Förderelement (100) ausgebildet und angeordnet ist, die Frischfleischstücke in einer Vibrationsfördervorrichtung (200) entlang einer Förderrichtung (300) zu fördern, **dadurch gekennzeichnet, dass** die Förderoberfläche (110) ganz oder teilweise aus Noppenblech besteht.

2. Förderelement (100) nach dem vorhergehenden Anspruch,
**dadurch gekennzeichnet, dass** das Förderelement (100) einen Trennabschnitt (120) mit einem, zwei oder mehreren Trennelementen (121) aufweist, wobei das Trennelement bzw. die Trennelements (121) derart ausgebildet und angeordnet ist bzw. sind, dass die Frischfleischstücke vereinzelt werden, wenn sie den Trennabschnitt (120) in Förderrichtung (300) passieren.

3. Förderelement (100) nach einem der vorhergehenden Ansprüche,
**dadurch gekennzeichnet, dass** das Förderelement (100) einen ersten Sortierabschnitt (130a) aufweist, der angeordnet und ausgebildet ist, Frischfleischstücke und/oder Fremdkörper auszusortieren und von einer weiteren Förderung in Förderrichtung (300) auszuschließen, die von einer ersten vorbestimmten Abmessung abweichen, insbesondere diese unterschreiten.

4. Förderelement (100) nach dem vorhergehenden Anspruch
**dadurch gekennzeichnet, dass** das Förderelement (100) mehrere Sortierabschnitte (130a,b,c) aufweist, wobei jeder der Sortierabschnitte (130a,b,c) angeordnet und ausgebildet ist, Frischfleischstücke und/oder Fremdkörper auszusortieren und von einer weiteren Förderung in Förderrichtung (300) auszuschließen, die von einer ersten vorbestimmten Abmessung abweichen, insbesondere diese unterschreiten.

5. Fördervorrichtung (200) zum Fördern von Frischfleischstücken entlang einer Förderrichtung (300), umfassend ein Förderelement (100) und einen Antrieb (210) zum Antreiben des Förderelements (100),
wobei die Fördervorrichtung (200) als Vibrationsfördervorrichtung ausgebildet ist, wobei das Förderelement (100) entlang mindestens einer Vibrationsrichtung (211) beweglich gelagert ist, **dadurch gekennzeichnet, dass** das Förderelement (100) nach einem der vorhergehenden Ansprüche ausgebildet ist und der Antrieb (210) angeordnet und ausgebildet ist, das Förderelement (100) entlang der mindestens einen Vibrationsrichtung (211) anzutreiben.

6. Fördervorrichtung (200) nach dem vorhergehenden Anspruch,
**dadurch gekennzeichnet, dass** die Fördervorrichtung (200) einen, zwei oder mehrere Sammelbehälter (230a,b,c) aufweist zur Aufnahme der aussortierten Frischfleischstücke und/oder Fremdkörper.

7. Fördervorrichtung (200) nach dem vorhergehenden Anspruch,
**dadurch gekennzeichnet, dass** der bzw. die Sammelbehälter (230a,b,c) unabhängig von vibrierenden Komponenten der Fördervorrichtung (200) gelagert ist bzw. sind.

8. Fördervorrichtung (200) nach einem der vorhergehenden Ansprüche 5 bis 7,
**dadurch gekennzeichnet, dass** das Förderelement (100) mit anderen Komponenten der Fördervorrichtung (200) über mindestens ein Dämmelement (140) verbunden ist.

9. Verfahren zum Fördern von Frischfleischstücken entlang einer Förderrichtung (300),
umfassend die Schritte:
- Bereitstellen eines Förderelements (100) nach einem der vorhergehenden Ansprüche 1 bis 4 und einer Fördervorrichtung (200) nach einem der vorhergehenden Ansprüche 5 bis 8,
- Antreiben des Förderelements (100) entlang der mindestens einen Vibrationsrichtung (211).

10. Verwendung eines Förderelements (100) nach einem der vorhergehenden Ansprüche 1 bis 4 zum Fördern von Frischfleischstücken in einer Fördervorrichtung (200) nach einem der Ansprüche 5 bis 8.

## Claims

1. A conveying element (100) for conveying pieces of fresh meat, comprising a conveying surface (110) for accommodating and conveying the pieces of fresh meat, wherein the conveying element (100) is embodied and arranged to convey the pieces of fresh meat along a conveying direction (300) in a vibration conveying device (200), **characterized in that** the conveying surface (110) consists entirely or partially of dimple plate.

2. The conveying element (100) according to the preceding claim, **characterized in that** the conveying element (100) encompasses a separating section (120) comprising one, two or a plurality of separating elements (121), wherein the separating element or the separating elements (121), respectively, is or are, respectively, embodied and arranged such that the pieces of fresh meat are separated when they pass through the separating section (120) in conveying direction (300).

3. The conveying element (100) according to one of the preceding claims, **characterized in that** the conveying element (100) encompasses a first sorting section (130a), which is arranged and embodied to sort out pieces of fresh meat and/or foreign objects, which deviate from a first predetermined size, in particular which fall below said size, and to exclude them from being further conveyed in conveying direction (300).

4. The conveying element (100) according to the preceding claim, **characterized in that** the conveying element (100) encompasses a plurality of sorting sections (130a,b,c), wherein each of the sorting sections (130a,b,c) is arranged and embodied to sort out pieces of fresh meat and/or foreign objects, which deviate from a first predetermined size, in particular which fall below said size, and to exclude them from being further conveyed in conveying direction (300).

5. A conveying device (200) for conveying pieces of fresh meat along a conveying direction (300), comprising a conveying element (100) and a drive (210) for driving the conveying element (100), wherein the conveying device (200) is embodied as vibration conveying device, wherein the conveying element (100) is movably supported along at least one vibration direction (211), **characterized in that** the conveying element (100) is embodied according to one of the preceding claims, and the drive (210) is arranged and embodied to drive the conveying element (100) along the at least one vibration direction (211).

6. The conveying device (200) according to the preceding claim, **characterized in that** the conveying device (200) encompasses one, two or a plurality of collection containers (230a,b,c) for accommodating the sorted out pieces of fresh meat and/or foreign objects.

7. The conveying device (200) according to the preceding claim, **characterized in that** the collection container or the collection containers (230a,b,c), respectively, is or are, respectively, supported independent from vibrating components of the conveying device (200).

8. The conveying device (200) according to one of the preceding claims 5 to 7, **characterized in that** the conveying element (100) is connected to other components of the conveying device (200) via at least one insulation element (140).

9. A method for conveying pieces of fresh meat along a conveying direction (300), comprising the steps:
- providing a conveying element (100) according to one of the preceding claims 1 to 4, and a conveying device (200) according to one of the preceding claims 5 to 8,
- driving the conveying element (100) along the at least one vibration direction (211).

10. A use of a conveying element (100) according to one of the preceding claims 1 to 4 for conveying pieces of fresh meat in a conveying device (200) according to one of claims 5 to 8.

## Revendications

1. Elément de transport (100) pour transporter des quartiers de viande fraîche, avec une surface de transport (110) destinée à recevoir et à transporter les quartiers de viande fraîche, l'élément de transport (100) étant conçu et placé pour transporter les quartiers de viande fraîche dans un dispositif de transport à vibrations (200) le long d'une direction de transport (300), **caractérisé en ce que** la surface de transport (110) est constituée entièrement ou en partie de noppes.

2. Elément de transport (100) selon la revendication précédente, **caractérisé en ce que** l'élément de transport (100) comporte une partie de séparation (120) avec un, deux ou plusieurs élément(s) de séparation (121), l'élément de séparation ou les éléments de séparation (121) étant conçu(s) et placé(s) de telle sorte que les quartiers de viande fraîche soient désolidarisés lorsqu'ils passent la partie de séparation (120) dans la direction de transport (300).

3. Elément de transport (100) selon l'une quelconque des revendications précédentes, **caractérisé en ce que** l'élément de transport (100) comporte une première partie de tri (130a) qui est placée et conçue pour éliminer en les triant et exclure d'un transport ultérieur dans la direction de transport (300) des quartiers de viande fraîche et/ou des corps étrangers qui diffèrent d'une première dimension prédéfinie, notamment qui n'atteignent pas cette dernière.

4. Elément de transport (100) selon la revendication précédente, **caractérisé en ce que** l'élément de transport (100) comporte plusieurs parties de tri (130a, b, c), chacune des parties de transport (130a,b,c) étant placée et conçue pour éliminer en les triant et exclure d'un transport ultérieur dans la direction de transport (300) des quartiers de viande fraîche et/ou des corps étrangers qui diffèrent d'une première dimension prédéfinie, notamment qui n'atteignent pas cette dernière.

5. Dispositif de transport (200) pour transporter des quartiers de viande fraîche le long d'une direction de transport (300), comprenant un élément de transport (100) et un entraînement (210) pour entraîner l'élément de transport (100), le dispositif de transport (200) étant conçu en tant que dispositif de transport à vibrations, l'élément de transport (100) étant logé en étant mobile le long d'au moins une direction de vibration (211), **caractérisé en ce que** l'élément de transport selon l'une quelconque des revendications précédentes est conçu et **en ce que** l'entraînement (210) est conçu et placé pour entraîner l'élément de transport (100) le long de l'au moins une direction de vibration (211).

6. Dispositif de transport (200) selon la revendication précédente, **caractérisé en ce que** le dispositif de transport (200) comporte un, deux ou plusieurs conteneurs de collecte (230a, b, c) pour reprendre les quartiers de viande et/ou les corps étrangers éliminés par tri.

7. Dispositif de transport (200) selon la revendication précédente, **caractérisé en ce que** le ou les conteneur(s) collecteur(s) (230a, b, c) est ou sont logé(s) indépendamment de composants vibrants du dispositif de transport (200).

8. Dispositif de transport (200) selon l'une quelconque des revendications précédentes 5 à 7, **caractérisé en ce que** l'élément de transport (100) est relié avec d'autres composants du dispositif de transport (200) par l'intermédiaire d'au moins un élément un élément isolant (140).

9. Procédé destiné à transporter des quartiers de viande fraîche le long d'une direction de transport (300), comprenant les étapes :
- Mise à disposition d'un élément de transports (100) selon l'une quelconque des revendications précédentes 1 à 4 et d'un dispositif de transport (200) selon l'une quelconque des revendications précédentes 5 à 8,
- Entraînement de l'élément de transport (100) le long de l'au moins une direction de vibration (211).

10. Utilisation d'un élément de transports (100) selon l'une quelconque des revendications précédentes 1 à 4 pour le transport de quartiers de viande fraîche dans un dispositif de transport (200) selon l'une quelconque des revendications 5 à 8.
